# EUROPÄISCHE PATENTSCHRIFT

(11) **EP 3 760 019 B1**
(45) Veröffentlichungstag und Bekanntmachung des Hinweises auf die Patenterteilung: **26.07.2023**
(21) Anmeldenummer: 20169184.7
(22) Anmeldetag: 10.04.2020
(51) Int. Cl.: A01B 15/04, A01B 23/02

(54) **SCHARE FÜR EIN BODENBEARBEITUNGSGERÄT**
COULTER FOR A SOIL WORKING IMPLEMENT
SOCS POUR UN APPAREIL DE TRAITEMENT DU SOL

(30) Priorität: 02.07.2019 AT 506022019
(43) Veröffentlichungstag der Anmeldung: 06.01.2021
(73) Patentinhaber: BOEHLERIT GmbH & Co.KG., 8605 Kapfenberg (AT)
(72) Erfinder: Bärnthaler, Walter, 8641 St. Marein im Mürztal (AT); Burböck, Hannes, 8652 Kindberg/Aumühl (AT)
(74) Vertreter: Wirnsberger & Lerchbaum Patentanwälte OG

(56) Entgegenhaltungen:
- EP-A1- 1 590 534
- EP-A1- 2 591 648
- EP-A1- 3 172 951
- EP-A1- 3 235 358
- DE-A1-102014 115 209

## Beschreibung

Die Erfindung betrifft eine Schare für ein Bodenbearbeitungsgerät zur Bearbeitung von Erdreich, wobei die Schare gebogen ist und zumindest ein Befestigungsloch zur Aufnahme eines Befestigungsmittels aufweist und wobei die Schare an einer Oberseite mit zumindest einem Hartmetalleinsatz bestückt ist, wie zum Beispiel aus der EP3172951A bekannt.

In der Landwirtschaft ist eine effektive Bodenbearbeitung im Vorfeld einer Aussaat erforderlich, um in der Folge ein gutes Ernteergebnis erzielen zu können. Für die Aufbereitung von landwirtschaftlich genutztem Erdreich sind verschiedene Bodenbearbeitungsgeräte bekannt, die in der Regel mittelbar oder unmittelbar an einem Traktor montiert und von diesem in das Erdreich eingreifend bewegt werden. Hierzu zählen beispielsweise auch Grubberscharen und damit verbundene Komponenten, mit welchen Erdreich aufgelockert bzw. abgehoben werden kann.

Grubberscharen und andere Einzelteile für die landwirtschaftliche Bodenbearbeitung bzw. entsprechende Geräte wurden viele Jahrzehnte ausschließlich aus Stahl gefertigt. Stahl ist einerseits relativ kostengünstig, andererseits grundsätzlich auch durchaus verschleißbeständig. In jüngerer Zeit hat es sich allerdings durchgesetzt, Stahlkomponenten zusätzlich mit Hartmetalleinsätzen zu bestücken. Hartmetall ist zwar um ein Vielfaches teurer als Stahl, jedoch hat sich gezeigt, dass durch eine entsprechende Hartmetallbestückung eine Einsatzzeit von beispielsweise Grubberscharen derart verlängert werden kann, dass sich in einer Gesamtbetrachtung die anfänglich höheren Herstellungskosten bezogen auf die maximale Nutzungsdauer amortisieren und insgesamt ein besseres Kosten-Nutzen-Verhältnis gegeben ist. Grubberscharen werden wie auch häufig andere Einzelteile an aufnehmenden Komponenten befestigt, die wiederum mit einer Zugmaschine wie einem Traktor in Verbindung stehen. Bei Grubberscharen ist es üblich, dass diese an einem Stiel befestigt sind, welcher eine gebogene Form aufweist. Dieser Stiel, der üblicherweise aus einem Stahl gebildet ist, unterliegt ebenfalls einem gewissen Verschleiß, wenn dieser unmittelbar mit abgehobenem und entlang der Schare und anschließend dem Stiel entlanggleitendem Erdreich in Kontakt kommt. Es ist daher häufig ein Leitblech vorgesehen, das zum besseren Durchmischen des Erdreiches dient. Dieses Leitblech wird zusammen mit der Grubberschare am Stiel befestigt, indem das Leitblech auf den Stiel gelegt und wonach die Grubberschare aufgelegt und mit einem Befestigungsmittel am Stiel befestigt wird, sodass das Leitblech zwischen Grubberschare und Stiel geklemmt gehalten wird. Um dies zu ermöglichen, weist sowohl die Grubberschare als auch das Leitblech zumindest ein Befestigungsloch auf, durch welche ein Befestigungsmittel führbar ist. Die Grubberschare ist dann bei einer Bearbeitung von Erdreich bearbeitungsaktiv, der Stiel hingegen dient bloß als Träger der Grubberschare und das geklemmte Leitblech dient als Schutz für den Stiel.

Die Stiele gemäß dem Stand der Technik weisen je nach Hersteller unterschiedliche Biegungen auf. Bekannt sind Stiele mit einem Radius von 300 mm, aber auch Stiele mit einem Radius von 600 mm. Auch Stiele mit kleineren oder größeren Radien oder mehreren Radien sind bekannt. Problematisch dabei ist, dass bislang für jede Ausgestaltung eines Stiels eine entsprechend adaptierte Schare bzw. Grubberschare bereitzustellen ist, welche jeweils an den Biegeradius des Stiels angepasst ist. Dies bedeutet für einen Landwirt, dass für den Austausch von abgenutzten Scharen verschiedenste Scharenmodelle vorrätig gehalten werden müssen, was einen hohen Lagervorrat erfordert.

Aufgabe der Erfindung ist es, eine Schare der eingangs genannten Art anzugeben, welche mit einer Vielzahl von Grundkörpern wie Stielen kompatibel ist, sodass diese unabhängig von einem Grundkörper möglichst universell einsetzbar ist.

Diese Aufgabe wird gelöst, wenn bei einer Schare der eingangs genannten Art eine Biegung der Schare mehrere verschiedene Biegeradien aufweist.

Die Erfindung geht von der Überlegung aus, dass bei einer Ausgestaltung einer Schare wie einer Grubberschare mit verschiedenen Biegeradien Bereiche für eine Anlage an einem Grundkörper wie einem Stiel geschaffen werden, welche zu einer vollflächigen Anlage am Grundkörper führen, wobei in Kauf genommen wird, dass in anderen Bereichen mit anderem Biegeradius keine vollflächige Anlage erreicht wird, sondern mitunter ein Spalt oder Spiel vorliegen kann. Die teilweise vollflächige Anlage ist allerdings für einen Funktionszweck völlig ausreichend. Die nicht perfekt anliegenden Bereiche hingegen, die mit einem anderen Biegeradius gestaltet sind, erlauben bei einem anderen Grundkörper mit anderen Biegungen wiederum eine umgekehrte Situation, sodass dann die nicht vollflächigen anliegenden Bereiche in diesem Fall zu den vollflächig anliegenden Bereichen werden und in anderen Bereichen ein Spalt bzw. ein Spiel besteht. Mit anderen Worten kann auch gesagt werden, dass durch die Gestaltung der Schare mit verschiedenen Biegeradien für einzelne Grundkörper zur Bodenbearbeitung ausreichende Anlagebereiche gestaltet werden, wobei für verschiedene Grundkörper verschiedene Anlagebereiche zur Anwendung kommen. Es kann somit von einer Universalschare gesprochen werden, welche auf verschiedene Grundkörpermodelle passt. Dies vereinfacht eine Lagerhaltung nachhaltig. In diesem Zusammenhang ist auch überraschend, dass es gar nicht erforderlich ist, dass eine Schare wie eine Grubberschare am Grundkörper in allen Bereichen oder zumindest weitgehend oder überwiegend vollflächig anliegt, sondern für den Funktionszweck bereits Teilbereiche ausreichend sind.

Bevorzugt sind ein erster Biegeradius und ein zweiter Biegeradius vorgesehen. Die beiden Biegeradien weisen verschiedene Radien auf. Wiewohl grundsätzlich beliebig viele Biegeradien vorgesehen sein können, ist eine Maximalanzahl von drei bis vier Biegeradien praktikabel. Bei mehr Biegeradien können zwar noch mehr Grundkörper bestückt werden, allerdings ist zum einen die Anzahl der Grundkörper überschaubar und zum anderen verringert sich mit mehr Biegeradien auch die maximale Fläche, an welcher im Einzelfall eines bestimmten Grundkörpers eine maximale vollflächige Anlage möglich ist. Besonders bevorzugt ist es in diesem Zusammenhang, dass mehrere Scharenabschnitte mit dem ersten Biegeradius oder dem zweiten Biegeradius gebogen sind. Hierbei kann insbesondere auch vorgesehen sein, dass entlang der Schare eine Abfolge gegeben ist von erstem Biegenradius, zweitem Biegeradius und dann wiederum erstem Biegeradius. Somit sind zwei Bereiche bzw. Scharenabschnitte mit dem ersten Biegeradius gegeben, zwischen welchen ein Bereich mit dem zweiten Biegeradius angeordnet ist. Dadurch kann bei einem Grundkörper, der einen entsprechenden ersten Biegeradius aufweist, die Schare am Beginn und am Ende zur Anlage kommen, was für den Funktionszweck völlig ausreichend ist. Bei einem Grundkörper mit dem zweiten Biegeradius hingegen kommt der Bereich der Schare mit dem zweiten Biegeradius vollflächig zur Anlage. Auch dies ist wiederum für eine einwandfreie Funktion im Einsatz ausreichend. Die einzelnen Flächen können dabei so gestaltet sein, dass die zwei Abschnitte mit dem ersten Biegeradius flächenmäßig etwa der Fläche mit dem zweiten Biegeradius entsprechen, sodass unabhängig vom Grundkörper pro Biegeradius gesamt jeweils etwa eine selbe Anlagefläche gegeben ist. Grundsätzlich kann dieses Verhältnis der Flächen aber auch variabel gestaltet sein und beispielsweise in Relation der Flächen mit dem ersten Biegeradius zu den Flächen mit dem zweiten Biegeradius im Bereich von 0,5:1,5 liegen.

Bevorzugt ist es, dass an einer Unterseite der Schare eine Ausnehmung zur Aufnahme eines Leitbleches vorgesehen ist. Durch eine entsprechende Ausnehmung wird eine Flexibilität in Bezug auf eine mögliche Aufnahme eines Leitbleches erreicht. Ist kein Leitblech gegeben, kann die Aufnahme frei bleiben. Andernfalls kann das Leitblech unter der Schare und über einem Stiel zu liegen kommen.

Die (Universal-)Schare gemäß der Erfindung kann somit mit oder ohne Leitblech verwendet werden. Gemäß dem Stand der Technik sind die Leitbleche zumeist so geformt, dass diese formschlüssig in eine entsprechende Ausnehmung an der Unterseite einer Schare eingreifen. Durch einen entsprechenden Formschluss wird nach Fixierung von Leitblech und Schare an einem Grundkörper mit einem Befestigungsmittel auch eine Verdrehsicherung erreicht. Bei einer erfindungsgemäßen Schare hingegen ist die Ausnehmung in Draufsicht nicht wie beispielsweise im Stand der Technik v-förmig abschließend, sondern schließt, gerade auch um mit verschiedener Form abschließende Leitbleche aufnehmen zu können, gerade ab. Um dennoch eine Verdrehsicherung zu erreichen, weist die Schare von der Unterseite abstehende Laschen auf. Diese Laschen umgreifen korrespondierende Außenseiten eines Grundkörpers, sodass die Schare auch bei den im Einsatz einwirkenden Kräften nicht um die Achse des oder der Befestigungsmittel geschwenkt werden kann, wodurch sich im Laufe der Zeit eine Lockerung der Schare ergeben würde. Somit wird trotz der Flexibilität zur Aufnahme verschiedener Leitbleche mit unterschiedlichen geometrischen Formen dennoch eine Sicherung gegen ungewolltes Schwenken im Einsatz und eine sich daraus letztlich ergebende Lockerung der Befestigung erreicht.

Um die Schare im Einsatz noch robuster gegen Verschleiß zu gestalten, können an einer Oberseite der Schare Versteifungen vorgesehen sein.

Weitere Merkmale, Vorteile und Wirkungen der Erfindung ergeben sich aus den nachfolgend dargestellten Ausführungsbeispielen. In den Zeichnungen, auf welche dabei Bezug genommen wird, zeigen:
Fig. 1 eine Schare von unten betrachtet;
Fig. 2 eine Seitenansicht der Schare gemäß Fig. 1;
Fig. 3 einen Schnitt entlang der Linie III-III in Fig. 1;
Fig. 4 eine rückseitige Ansicht einer Schare gemäß Fig. 1;
Fig. 5 eine Ansicht auf eine an einem Grundkörper befestigte Schare von unten;
Fig. 6 eine an einem ersten Bodenbearbeitungsgerät befestigte Schare im Querschnitt;
Fig. 7 die Schare aus Fig. 6 auf einem weiteren Bodenbearbeitungsgerät befestigt im Querschnitt;
Fig. 8 die Schare aus Fig. 6 auf einem noch weiteren Bodenbearbeitungsgerät befestigt im Querschnitt;
Fig. 9 eine perspektivische Darstellung einer auf einem Bodenbearbeitungsgerät befestigten Schare;
Fig. 10 eine auf einem Bodenbearbeitungsgerät befestigte Schare.

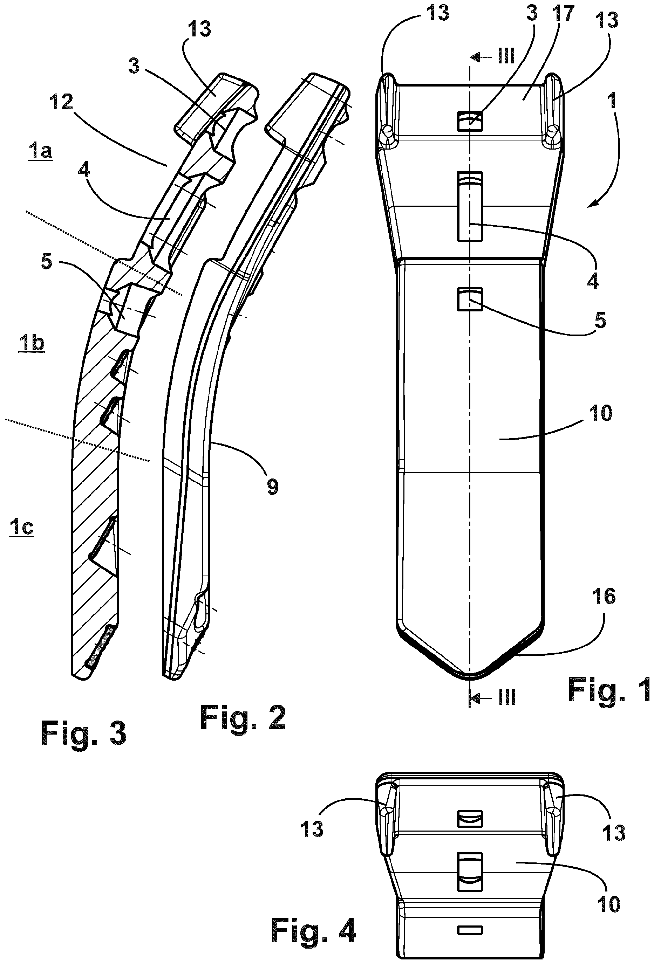

In Fig. 1 bis Fig. 4 ist eine erfindungsgemäße Schare 1 in verschiedenen Ansichten bzw. Querschnitten dargestellt, nämlich in einer Ansicht von unten gemäß Fig. 1, einer Seitenansicht gemäß Fig. 2 sowie einer rückseitigen Ansicht gemäß Fig. 4 und in einem Querschnitt gemäß Fig. 3, welche einem Schnitt entlang der Linie III-III in Fig. 1 entspricht.

Wie in Fig. 1 bis Fig. 4 ersichtlich ist, ist die Schare 1 gebogen ausgebildet und erstreckt sich länglich von einem ersten Ende 16 zu einem zweiten Ende 17. Am ersten Ende 16 ist die Schare 1 spitz zulaufend ausgeformt, was zusammen mit der gebogenen Ausführung für ein Einschneiden in ein Erdreich zweckmäßig bzw. erforderlich ist. Im Anschluss an das erste Ende 16 erstreckt sich die Schare 1 zunächst mit konstanter Breite, ehe die Form der Schare 1 zum zweiten Ende 17 hin sich zunächst konisch verbreitert und anschließend wieder in einen Bereich mit konstantem Querschnitt übergeht, wie dies insbesondere in Fig. 1 und Fig. 4 ersichtlich ist.

Die Schare 1 weist entlang der Längserstreckung eine die Schare 1 nach oben hin begrenzende Oberseite 9 sowie auf der gegenüberliegenden Seite eine entsprechend begrenzende Unterseite 10 auf. Oberseite 9 und Unterseite 10 sind durch Seitenflächen verbunden. Die Schare 1 weist des Weiteren ein erstes Befestigungsloch 3, ein zweites, als Langloch ausgebildetes Befestigungsloch 4 sowie ein drittes Befestigungsloch 5 auf. Diese Befestigungslöcher 3, 4, 5 durchsetzen die Schare 1 von der Oberseite 9 bis zur Unterseite 10 und dienen funktional zur Aufnahme eines Befestigungsmittels, wenn die Schare 1 auf einem Bodenbearbeitungsgerät 2 befestigt wird. Hierfür weist die Schare 1 des Weiteren Laschen 13 auf, welche in noch zu erläuternder Weise mit dem Bodenbearbeitungsgerät 2 zusammenwirken. Die Laschen 13 sind am zweiten Ende 17 an der Unterseite 10 angeformt und erstrecken sich von dieser vorzugsweise senkrecht weg.

Wie insbesondere in Fig. 2 und Fig. 3 ersichtlich ist, weist die Schare 1 des Weiteren eine Ausnehmung 12 auf, die sich vom zweiten Ende 17 weg erstreckt bzw. an diesem ansetzt. Die Ausnehmung 12 kann sich beispielsweise wie dargestellt entlang des dann, aus anderer Blickrichtung, nämlich vom zweiten Ende 17 her betrachtet, konisch verjüngenden Zwischenabschnittes bis zu dem Abschnitt der Schare 1 mit konstantem Querschnitt (mit Ausnahme des daran anschließenden ersten Endes 16) erstrecken. Die Ausnehmung 12 ist dabei an einem Abschluss, welcher einem Beginn der Ausnehmung 12 im Bereich des zweiten Endes 17 gegenüberliegt, gerade abgeschlossen.

Wie erwähnt ist die Schare 1 gebogen ausgebildet. Dabei weist die Schare 1 erfindungsgemäß verschiedene Biegeradien R1, R2 auf. Die Biegeradien R1, R2 sind in verschiedenen Scharenabschnitten 1a, 1b, 1c gegeben. Im Ausführungsbeispiel gemäß Fig. 1 liegt ein erster Biegeradius R1 in den Scharenbereichen 1a, 1c vor. Zwischen diesen beiden Scharenabschnitten 1a, 1c, die im Bereich des ersten Endes 16 bzw. im Bereich des zweiten Endes 17 beginnen, liegt ein weiterer Scharenabschnitt 1b, der mit einem zweiten Biegeradius R2 ausgebildet ist. Der Biegeradius R1 kann beispielsweise 300 mm betragen, wohingegen der Biegeradius R2 doppelt so groß ist und 600 mm beträgt. Die Schare 1 weist somit für eine Befestigung an einem Bodenbearbeitungsgerät 2 in den Scharenbereichen 1a, 1b, 1c Anlagebereiche mit verschiedenen Biegeradien R1, R2 auf.

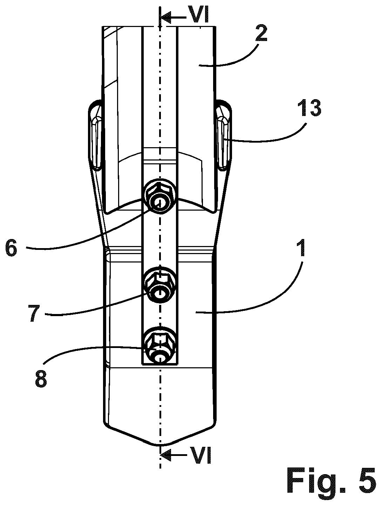

In Fig. 5 ist die Schare 1 gemäß Fig. 1 bis Fig. 4 nochmals dargestellt, allerdings befestigt auf einem Stiel eines Bodenbearbeitungsgerätes 2. Wie ersichtlich ist, ist die Schare 1 mit drei Befestigungsmitteln 6, 7, 8 am Stiel befestigt. Die Befestigungsmittel 6, 7, 8 umfassen jeweils eine Schraube sowie eine hierzu korrespondierende Mutter, mit welchen durch Eingriff in die Befestigungslöcher 3, 4, 5 eine Fixierung am Stiel bzw. Bodenbearbeitungsgerät 2 möglich ist. Dabei umfassen die an der Unterseite 10 am zweiten Ende 17 anschließenden und sich vorzugsweise senkrecht nach unten erstreckenden Laschen 13 formschlüssig den Stiel des Bodenbearbeitungsgerätes 2, sodass auch ohne Formschluss mittels eines Leitbleches an der Unterseite 10 eine Sicherung gegen ein Verdrehen der Schare 1 im Einsatz gegeben ist bzw. die Positionsstabilität durch die drei Befestigungsmittel 6, 7, 8 weiter erhöht wird. Selbst wenn lediglich eines der Befestigungsmittel 6, 7, 8 vorgesehen ist, ist ein Schwenken der Schare 1 bei sehr hoher Krafteinwirkung vermieden, sodass sich die lösbare Verbindung mit einem der Befestigungsmittel 6, 7, 8 nicht während des Betriebes sequenziell lockern kann, bis sich die Schare 1 vom Stiel löst.

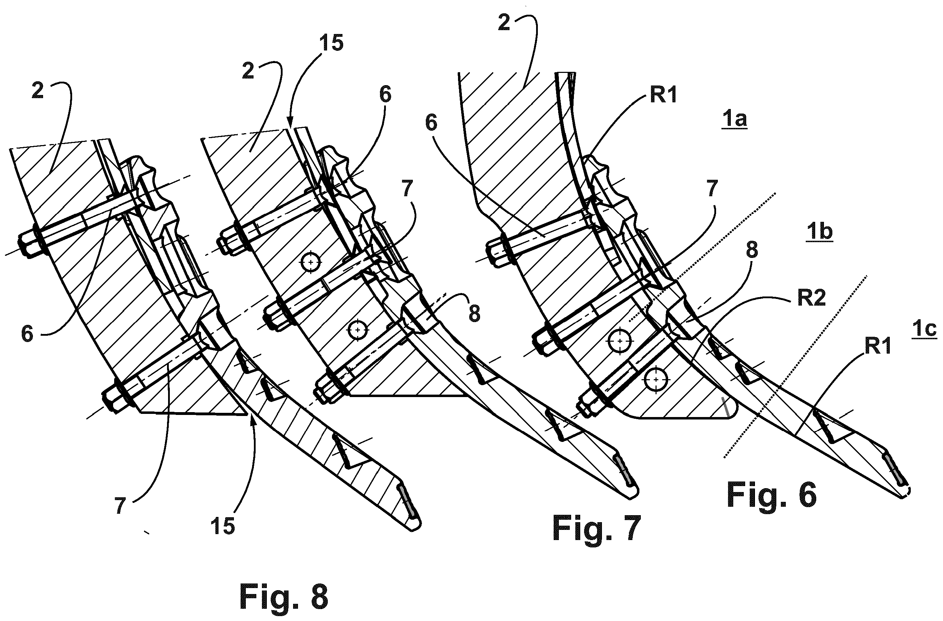

In Fig. 6 bis Fig. 8 ist das Konzept der verschiedenen Biegeradien R1, R2 bzw. die universelle Einsetzbarkeit einer erfindungsgemäßen Schare 1 beispielhaft in Querschnitten dargelegt. Dargestellt ist jeweils eine einzelne, unveränderte erfindungsgemäße Schare 1, die jedoch auf verschiedenen Grundkörpern wie einem Stiel eines Bodenbearbeitungsgerätes 2 befestigt ist. In der ersten Situation gemäß Fig. 6 weist der gebogene Stiel einen durchgehenden Radius von 300 mm auf. Die Schare 1 kommt somit mit dem ersten Biegeradius R1 in den Scharenabschnitten 1a, 1c vollflächig und mit gleichem Radius zur Anlage. Über die bereits zuvor erläuterte Ausnehmung 12 kann auch ein Leitblech 18 im Bereich des zweiten Endes 17 unter flächiger Anlage der Schare 1 aufgenommen werden. Die Ausnehmung 12 weist zwar im Vergleich mit dem Stand der Technik keine v-förmige oder anders geformte Struktur zur formschlüssigen Aufnahme eines korrespondierenden Endes des Leitbleches 18 auf, sondern ist wie erläutert gerade abschließend ausgebildet, eine Verdrehsicherung wird jedoch durch die Laschen 13 in der bereits dargestellten Weise erreicht. Im mittleren Scharenabschnitt 1b liegt für die Schare 1 ein Biegeradius R2 vor, welcher 600 mm beträgt. In diesem Bereich ist daher keine vollflächige Anlage der Schare 1 an den Stiel möglich, sondern es ist ein Spalt 15 gegeben. Da jedoch in den Scharenabschnitten 1a, 1c eine vollflächige Anlage gegeben ist, ist bereits eine ausreichende Fixierung der Schare 1 am Stiel 2 auch für Einsatzzwecke gegeben.

In Fig. 7 ist der Stiel bzw. das Bodenbearbeitungsgerät 2 mit einem variierenden Radius von endseitig 300 mm und anschließend, zum Leitblech 18 hin, 600 mm ausgebildet. In diesem Fall liegt die Schare 1 in den Scharenabschnitten 1b, 1c vollflächig am Stiel an. Im Bereich des zweiten Endes 17 der Schare 1 sowie des Leitbleches 18 ergibt sich in diesem Fall jedoch ein Spalt 15 endseitig der Schare 1, weil in diesem Fall die Radien von Schare 1 und Stiel unterschiedlich ausgebildet sind, nämlich der Stiel 600 mm und die Schare 1 mit 300 mm.

In Fig. 8 ist eine weitere Situation dargestellt, in welcher der Stiel bzw. das Bodenbearbeitungsgerät 2 durchgehend mit einem Radius von 600 mm ausgebildet ist. In diesem Fall liegt die Schare 1 im mittleren Scharenabschnitt 1b an, wohingegen in den Scharenabschnitten 1a, 1c jeweils ein Spalt 15 gegeben ist. Auch in dieser Situation ist es wiederum so, dass bereichsweise eine vollflächige Anlage der Schare 1 am Stiel erzielt wird, in diesem Fall im Bereich des mittleren Scharenabschnittes 1b, was für Einsatzzwecke völlig ausreichend ist.

Das Konzept der verschiedenen Biegeradien R1, R2 einer Schare 1 erlaubt es somit, die Schare 1 auf Bodenbearbeitungsgeräten 2 zu montieren, welche unterschiedlich gebogen sind. Die Erfindung macht sich dabei die Erkenntnis zunutze, dass es für Einsatzzwecke ausreichend ist, lediglich in einzelnen Bereichen eine vollflächige Anlage der Schare 1 an einem Bodenbearbeitungsgerät 2 vorliegen zu haben. Dies erlaubt es wiederum, in verschiedenen Scharenabschnitten verschiedene Biegeradien R1, R2 vorzusehen. Wenngleich diesbezüglich die Zahl an Biegeradien R1, R2 nicht limitiert ist, ist es empfehlenswert, die Anzahl an Biegeradien zu limitieren und bei dieser Limitierung so zu wählen, dass diese den üblichen Radien von Grundkörpern wie Stielen entsprechen. Die Schare 1 ist in einer derartigen Ausbildung dann als Universalschare verwendbar und kann mit verschiedensten Modellen von Bodenbearbeitungsgeräten 2 verwendet bzw. kombiniert werden.

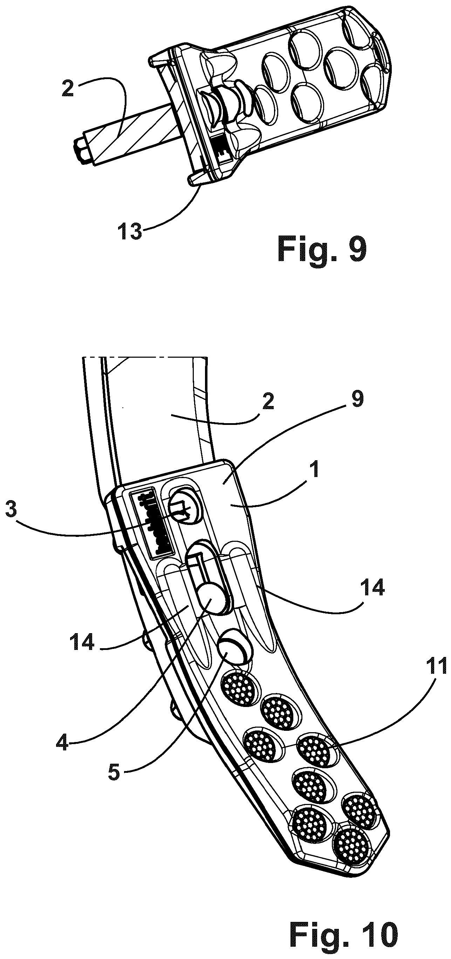

In Fig. 9 ist eine perspektivische Darstellung in einem Teilschnitt dargestellt, wobei insbesondere nochmals die Interaktion der Laschen 13 mit dem Bodenbearbeitungsgerät 2 hervorgehoben ist. Wie ersichtlich ist, sind die Laschen 13 an einer Unterseite 10 der Schare 1 so ausgebildet, dass diese formschlüssig mit einem Bodenbearbeitungsgerät 2 zusammen wirken, wodurch eine Sicherung gegen ein Verdrehen der Schare 1 im Einsatz gegeben ist.

In Fig. 10 ist schließlich eine weitere perspektivische Darstellung einer Schare 1, die an einem Bodenbearbeitungsgerät 2 befestigt ist, ersichtlich. In der Regel weist eine erfindungsgemäße Schare 1 an der Oberseite 10 eine Vielzahl von Vertiefungen auf, in welchen Hartmetalleinsätze 11 befestigt sind, insbesondere durch Kleben oder Löten. Die Oberseite 9 kann darüber hinaus mit Versteifungen 14 vorgesehen sein, welche den Scharengrundkörper aussteifen, sodass dieser für Einsatzzwecke noch robuster gestaltet ist.

## Patentansprüche

1. Schar (1) für ein Bodenbearbeitungsgerät (2) zur Bearbeitung von Erdreich, wobei die Schar (1) gebogen ist und zumindest ein Befestigungsloch (3, 4, 5) zur Aufnahme eines Befestigungsmittels (6, 7, 8) aufweist und wobei die Schar (1) an einer Oberseite (9) mit zumindest einem Hartmetalleinsatz (11) bestückt ist, **dadurch gekennzeichnet, dass** eine Biegung der Schar (1) mehrere verschiedene Biegeradien (R1, R2) für ausreichende Anlagebereiche der Schar (1) für verschiedene Grundkörper aufweist, wobei der Grundkörper als Stiel mit einem Radius von 300 mm und/oder 600 mm ausgebildet ist.

2. Schar (1) nach Anspruch 1, **dadurch gekennzeichnet, dass** ein erster Biegeradius (R1) und ein zweiter Biegeradius (R2) vorgesehen sind.

3. Schar (1) nach Anspruch 2, **dadurch gekennzeichnet, dass** mehrere Scharabschnitte (1a, 1b, 1c) mit dem ersten Biegeradius (R1) oder dem zweiten Biegeradius (R2) gebogen sind.

4. Schar (1) nach Anspruch 2 oder 3, **dadurch gekennzeichnet, dass** zwischen zwei Scharabschnitten (1a, 1c) mit dem ersten Biegeradius (R1) ein Scharabschnitt (1b) mit dem zweiten Biegeradius (R2) angeordnet ist.

5. Schar (1) nach einem der Ansprüche 1 bis 4, **dadurch gekennzeichnet, dass** an einer Unterseite (10) eine Ausnehmung (12) zur Aufnahme eines Leitbleches (13) vorgesehen ist.

6. Schar (1) nach einem der Ansprüche 1 bis 5, **dadurch gekennzeichnet, dass** von einer Unterseite (10) abstehende Laschen (13) vorgesehen sind.

7. Schar (1) nach einem der Ansprüche 1 bis 6, **dadurch gekennzeichnet, dass** mehrere die Schar (1) durchsetzende Befestigungslöcher (3, 4, 5) vorgesehen sind.

8. Schar (1) nach einem der Ansprüche 1 bis 7, **dadurch gekennzeichnet, dass** an einer Oberseite (9) Versteifungen (14) vorgesehen sind.

## Claims

1. Share (1) for a soil cultivation device (2) for cultivating soil, wherein the share (1) is bent and has at least one fastening hole (3, 4, 5) for receiving a fastening means (6, 7, 8) and wherein the share (1) is fitted on an upper side (9) with at least one carbide insert (11), **characterized in that** a bend of the share (1) has several different bend radii (R1, R2) for sufficient contact areas of the share (1) for different base bodies, wherein the base body is designed as a stem with a radius of 300 mm and/or 600 mm.

2. Share (1) according to claim 1, **characterized in that** a first bend radius (R1) and a second bend radius (R2) are provided.

3. Share (1) according to claim 2, **characterized in that** a plurality of share sections (1a, 1b, 1c) are bent with the first bend radius (R1) or the second bend radius (R2).

4. Share (1) according to claim 2 or 3, **characterized in that** a share section (1b) with the second bend radius (R2) is arranged between two share sections (1a, 1c) with the first bend radius (R1).

5. Share (1) according to one of claims 1 to 4, **characterized in that** a recess (12) for receiving a guide plate (13) is provided on an underside (10).

6. Share (1) according to one of claims 1 to 5, **characterized in that** tabs (13) projecting from an underside (10) are provided.

7. Share (1) according to one of claims 1 to 6, **characterized in that** a plurality of fastening holes (3, 4, 5) that pass through the share (1) are provided.

8. Share (1) according to one of claims 1 to 7, **characterized in that** reinforcements (14) are provided on an upper side (9).

## Revendications

1. Soc (1) pour un instrument de travail du sol (2) destiné au travail de la terre, sachant que le soc (1) est courbé et comporte au moins un trou de fixation (3, 4, 5) destiné à recevoir un moyen de fixation (6, 7, 8) et sachant que le soc (1) est équipé sur une face supérieure (9) d'au moins un élément rapporté en métal dur (11), **caractérisé en ce qu'**une courbure du soc (1) comporte plusieurs rayons de courbure (R1, R2) différents pour des plages de contre-sep suffisantes du soc (1) pour divers corps de base, sachant que le corps de base est constitué sous forme de manche avec un rayon de 300 mm et/ou 600 mm.

2. Soc (1) selon la revendication 1, **caractérisé en ce qu'**un premier rayon de courbure (R1) et un deuxième rayon de courbure (R2) sont prévus.

3. Soc (1) selon la revendication 2, **caractérisé en ce que** plusieurs sections de soc (1a, 1b, 1c) sont courbées avec le premier rayon de courbure (R1) ou le deuxième rayon de courbure (R2).

4. Soc (1) selon la revendication 2 ou 3, **caractérisé en ce qu'**une section de soc (1b) avec le deuxième rayon de courbure (R2) est disposée entre deux sections de soc (1a, 1c) avec le premier rayon de courbure (R1).

5. Soc (1) selon l'une quelconque des revendications 1 à 4, **caractérisé en ce qu'**un évidement (12) destiné à recevoir un déflecteur (13) est prévu sur une face inférieure (10).

6. Soc (1) selon l'une quelconque des revendications 1 à 5, **caractérisé en ce que** des pattes (13) faisant saillie de la face inférieure (10) sont prévues.

7. Soc (1) selon l'une quelconque des revendications 1 à 6, **caractérisé en ce que** plusieurs trous de fixation (3, 4, 5) traversant le soc (1) sont prévus.

8. Soc (1) selon l'une quelconque des revendications 1 à 7, **caractérisé en ce que** des renforts (14) sont prévus sur une face supérieure (9).
